Europäisches Patentamt

(19) European Patent Office

Office européen des brevets

(11) Publication number: **0 005 570**
**B1**

## EUROPEAN PATENT SPECIFICATION

(45) Date of publication of patent specification: **18.11.81**

(21) Application number: **79200227.1**

(22) Date of filing: **09.05.79**

(51) Int. Cl.³: **A 21 C 9/04,** A 21 C 3/02, B 65 H 29/66, B 26 D 7/32

(54) Method and apparatus for forming a layer of emulsion-like material in a predetermined thickness and use of such an apparatus in a method and system for making cracker paste or puff paste.

(30) Priority: **09.05.78 NL 7804983**

(43) Date of publication of application:
**28.11.79 Bulletin 79/24**

(45) Publication of the grant of the European patent:
**18.11.81 Bulletin 81/46**

(84) Designated Contracting States:
**DE FR GB NL**

(56) References cited:
**DE - A - 2 050 803**
**GB - A - 1 290 704**

(73) Proprietor: **Machinefabriek C. Rijkaart B.V.**
**2e Industrieweg 8**
**NL-4147 CT Asperen (NL)**

(72) Inventor: **Rutten, Jacques Paul**
**15, Hugo Verrieststraat**
**Tilburg (NL)**

(74) Representative: **Hoorweg, Petrus Nicolaas et al,**
**OCTROOIBUREAU ARNOLD & SIEDSMA**
**Sweelinckplein 1**
**NL-2517 GK The Hague (NL)**

Courier Press, Leamington Spa, England.

Method and apparatus for forming a layer of emulsion-like material in a predetermined thickness and use of such an apparatus in a method and system for making cracker paste or puff paste.

The invention relates to a method and a device to form a layer of desired thickness of an emulsion-like substance, for example butter or margarine from a feedstock of any shape.

In industrial processes it is sometimes desired to add an emulsion-like substance in the form of a layer to the process, for which purpose the substance has to be prepared so that the resultant layer can be readily worked up. However, emulsion-like substances bring about the problem that deformation of an amount of the substance, for example, by pressing extrusion and so on is performed only with difficulty, since the devices required to this end do not have sufficient grip on the substance or since the forces ensuring such a grip are considerably heavy. Severing layers of the substance from the feedstock is not a solution either, since the structure of the substance in the layer is not well appropriate for futher processing.

The method according to the invention is distinguished in that an amount of substance is repeatedly scraped from the feedstock and subsequently a portion of the desired thickness is separated from the scraped off amount, the resultant portions being then joined one behind the other to form the desired layer.

Owing to the scraped treatment of the emulsion-like substance the structure thereof is broken up and further treatment of the substance is facilitated even at lower temperatures without a change of the desired properties of the substance.

The device according to the invention is distinguished in that it comprises a feedstock container having a outlet port, a scraping member having at least one peripheral strip movable along a path past said outlet port and a wiper projecting into the path of the peripheral strip at a distance from said outlet port.

The scraping member is adapted to reciprocate but in a preferred embodiment the scraping member is constructed in the form of a plurality of blades rotatable about a shaft, each peripheral strip of which being substantially parallel to said shaft. In such a construction the substance can be worked continuously resulting in a high capacity.

In order to permit of varying the thickness of the layer to be formed it is advantageous to have the possibility of introducing the scraping member to a greater or lesser extent into the path of the or each peripheral strip by means of an adjustability of the scraping member at right angles to the direction of movement of the peripheral strips.

The device described above is particularly suitable for use in puff-paste producing systems. Such systems comprise a dough stock container and a belt conveyor system of any structure including rollers for the continuous application of layers or sheets of dough and subsequently laminating the same.

The device described above is arranged in accordance with the invention at the beginning of the group of band conveyors and a layer of butter is deposited on the first section of the band conveyor system, on which a layer of dough is subsequently deposited, the two layers being then further processed in common in accordance with the known principles of the cracker paste machines. In this manner cracker paste can be simply produced by the French method.

The invention will be explained more fully with reference to the following description of the figures. The drawing shows in

fig. 1 a first embodiment in a schematic representation of a device in accordance with the invention,

fig. 2 a schematic view of a cracker-paste producing system and

fig. 3 a perspective view of a detail of the system of fig. 2 in which the device according to the invention is illustrated in a second embodiment.

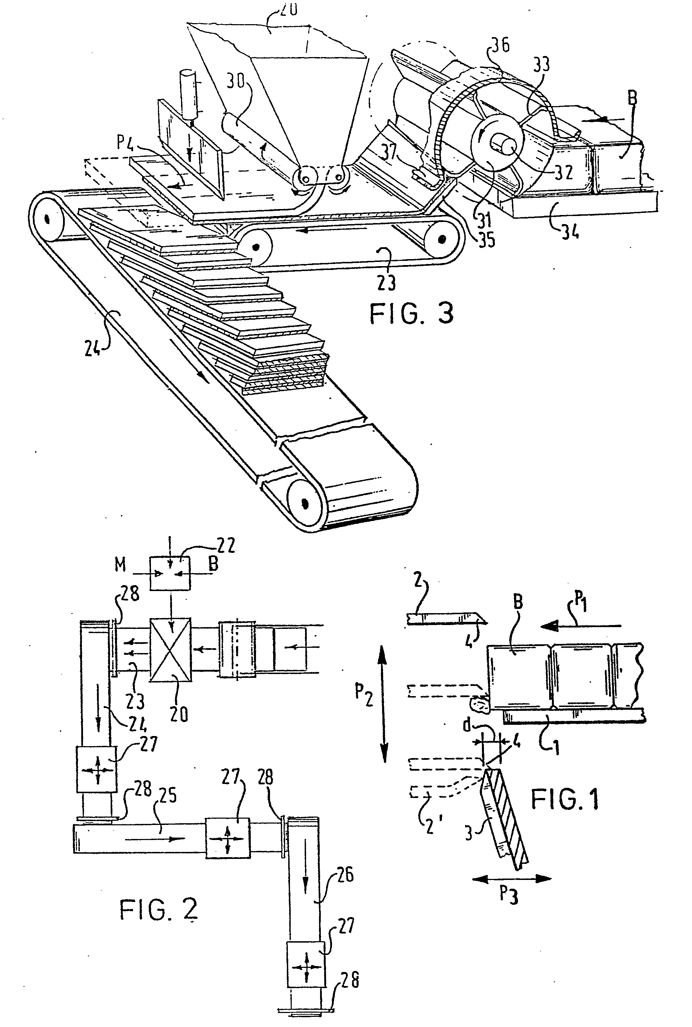

The emulsion-like substance to be formed in accordance with the invention into a layer of a given thickness is represented in fig. 1 in the form of a batch of rectangular shape B, three of which are shown on the holder 1 in fig. 1. Pressing means (not shown) serve to push the batches B in the direction of the arrow P1 across the edge of the holder 1 so that a scraping member 2 can scrape an amount of the substance from the left-hand batch B, the substance accumulating on the bottom side of the scraping member 2. By driving means (not shown) the scraping member 2 can be moved up and down in the direction of the arrow P2 from a position indicated by solid lines in fig. 1 via positions indicated by broken lines into a lowermost position 2'. Near this lowermost position 2' a wiping member 3 is disposed in a stationary manner and serves to sever a portion of the scraped-off amount from the scraping member 2 on the bottom side of the scraping blade. It will be obvious that the thickness of the wiped-off portion corresponds to the extent to which the wiping member protrudes into the path of the peripheral strip 4 of the scraping member 2. This extent is indicated by $d$ in fig. 1. The portions of the desired thickness $d$ repeatedly wiped off will advance the previously wiped-off portions on the wiping member 3 so that the desired layer will be formed. Obviously the scraping effect of the member 2 changes the structure of the substance in the batch B as a result of the shear forces applied to the substance. Owing to the shear effect the original structure of the substances changes though not the properties so that even at very low temperatures the substance remains readily workable.

It should finally be noted that the extend $d$ can be varied by inserting the wiping member 3 in the direction of the arrow P3, that is to say, at right angles to the direction of movement of the scraping member 2, to a greater or lesser extent into the path of movement of the peripheral strip 4.

Fig. 1 shows the scraping member 2 in the form of a flexible blade so that the peripheral strip can blend upwards when the scraping member 2 has reached the lowermost position 2'. It should be noted here that the redundant amount of substance not wiped off either remains in place or is conducted by means not shown back to the stock on the holder 1.

Fig. 2 shows schematically a cracker-paste producing system. The system mainly comprises a dough stock holder 20, which receives the dough from a mixing system 22, in which the ingredients flour M, water W and butter B are mixed. The resultant mixture in the stock holder 20 is conveyed on in layerwise fashion on a band conveyor system 23 in the successive sections 24, 25 and 26 in a manner to be described more fully with reference to fig. 3. Each section has its own lamination member 27 for laminating stacked layers of dough. At the end of each band conveyor section a cutting station 28 serves to sever a given sheet of dough from the strip of dough lying on each section. Such a system is considered to be known and lies outside the scope of the present invention. Fig. 3 shows part of the system of fig. 2, that is to say, the part located at the transition from the band conveyor sections 23 to 24.

Above the conveyor section 23 is arranged the feeding through or stock holder 20 of the dough mixture concerned, on the bottom side of which two laminating rollers 30 deposit a layer of dough of a given thickness on the upper run of the conveyor band 23. This layer of dough is conducted away to the left in fig. 3 in the direction of the arrow P4.

At the beginning of the band conveyor 23 the device embodying the invention is arranged for applying a layer of butter to the upper run of the conveyor band so that at the end of the conveyor band a strip of two layers i.e. a layer of butter and a superimposed layer of dough is obtained.

The application of the layer of butter is performed by means of a rotatable scraping member 31 consisting of scraping blades 33 rotatable about a shaft 32, which repeatedly sever an amount of butter from blocks of butter B supported on a holder 34.

Into the rotary path of the scraping blades 33 protrudes the wiping member 35 so that each time a portion of the amount of butter sticking to the scraping blades 33 is picked up in the manner described with reference to fig. 1. Along the circumference of the path of the scraping blades 33 is arranged an arcuate screening plate 36, which is prolonged at the wiping member 35 by a guide plate 37, which is located at a distance from the carrying surface of the wiping member 35. This guide plate 37 serves to smooth the upper surface of the butter layer on the wiping member 35 and on the conveyor section 23 respectively.

In the embodiment shown in fig. 3 the peripheral strips of the scraping blades 33 are in trailing positions relative to the direction of rotation, whilst the wiping member 35 is shaped so that a shearing movement is performed between the scraping blades 33 and the wiping member 35, which ensures an even run of the device.

After a given length of the dough-butter layer has passed by the cutting station 28 of fig. 3, this length is cut off and reaches the conveyor section 24, the drive of which is such that the severed portions are deposited imbricately one upon the other. It will be obvious that in the next lamination operation again a single layer is obtained at the station 27 (see fig. 2), which comprises alternately five layers of dough and butter in the embodiment shown.

In order to avoid soiling of the band conveyor in the section 24 by adhering butter residues it is advantageous to make the butter layer narrower than the dough layer which is illustrated on the left-hand top side of fig. 3. The reduction in width of the butter layer depends upon the number of sheets to be stacked in the conveyor section 24.

**Claims**

1. A method of forming a layer of a desired thickness of an emulsion-like substance, for example butter or margarine, from a feedstock (B) of said substance of any shape by repeatedly scraping off an amount from said feedstock characterized by subsequently severing a portion of the desired thickness from said amount, after which the portions are joined in order of succession to form the desired layer.

2. A device for carrying out the method claimed in claim 1 comprising a feedstock holder (34) having an outlet port, a scraping member (33) having at least one peripheral strip adapted to move along a path past said port and a wiping member (35) protruding into the path of the peripheral strip at a distance from said port.

3. A device as claimed in claim 2 characterized in that the scraping member is constructed in the form of a plurality of blades (33) rotatable about a shaft (32), each blade having a peripheral strip extending substantially parallel to said shaft.

4. A device as claimed in claims 2 and 3, characterized in that with respect to the direction of rotation the peripheral strip is in a trailing position.

5. A device as claimed in claims 2 to 4 characterized in that the wiping member (35) and the peripheral strip of the scraping member (33) are relatively disposed in shear-like fashion.

6. A device as claimed in claims 2 to 5, characterized in that a guide plate (37) is provided at a distance from the carrying surface of the wiping member (35).

7. A device as claimed in claims 2 to 6, characterized in that the wiping member (35) is adjustable at right angles to the direction of movement of the peripheral strip.

8. A device as claimed in any one of the preceding claims characterized in that the or each scraping blade (33) is made from flexible material.

9. A system for making cracker-paste or puff-paste comprisng a dough feedstock holder (20), a group of band conveyors (23—26) arranged beneath said holder, cutting means (28) and laminating means (27) for repeated stacking, laminating and cutting to given lengths sheets of dough, characterized by a device as claimed in any one of the preceding claims arranged at the beginning of the band conveyor (23) extending beneath the dough feedstock holder (20).

10. A method of making cracker-paste or puff-paste with the aid of the system claimed in claim 9, characterized in that the layer of butter or margarine deposited on the band conveyor (23) is narrower than the layer of dough applied thereto from the feedstock holder (34).

## Revendications

1. Procédé pour former une couche désirée d'une substance sous forme d'émulsion, par exemple du beurre ou de la margarine d'une réserve d'alimentation (20) d'une dite substance d'une forme quelconque par enlèvement par grattage répété de ladite réserve, caractérisé en ce qu' une portion enlevée d'une épaisseur désirée d'une quantité donnée, après que des portions sont rassemblées pour former ensemble une couche désirée.

2. Dispositif pour promouvoir le procédé selon la revendication 1, caractérisé en ce qu'il comprend un support (34) de la réserve d'alimentation ayant un orifice de sortie, un organe-grattoir (33), ayant au moins une bande circulaire pour se déplacer le long d'une course placée au-delà dudit orifice et un organe d'enlèvement (35) faisant saillie dans la course de la bande circulaire à une distance de ladite sortie.

3. Dispositif selon la revendication 2, caracterisé en ce que le membre-grattoir (33) est construit sous forme d'une pluralité de lames (33) en rotation autour d'un arbre (32), chaque lame ayant une course circulaire s'étendant parallèlement audit arbre.

4. Dispositif selon les revendications 2 et 3, caractérisé en ce qu'en fonction de la direction de la rotation, la bande périphérique est dans une position de bord de fuite.

5. Dispositif selon l'une quelconque des revendications 2 à 4, caractérisé en ce que l'organe d'enlèvement (35) et la bande périphérique de l'organe grattoir (33) sont disposés respectivement en position sous forme de ciseaux.

6. Dispositif selon l'une quelconque des revendications 2 à 5, caractérisé en ce qu'une plaque-guide (37) est placée à une distance de la surface porteuse de l'organe d'enlèvement (35).

7. Dispositif selon l'une quelconque des revendications 2 à 6, caractérisé en ce quq l'organe d'enlèvement (35) est réglable à angle droit à la direction du déplacement de la bande périphérique.

8. Dispositif selon l'une quelconque des revendications précédentes, caractérisé en ce que la ou chaque lame grattoir (33) est fabriquée en matériau flexible.

9. Procédé pour fabriquer de la pâte à biscuit ou de la pâte feuilletée caractérisé en ce qu'il comprend un support de réserve de pâte (20), un groupe de convoyeurs à bande (23—26) disposé sous ledit support, des moyens de coupe (28), de laminage (27) pour empiler, laminer et couper en continu des feuilles de longueurs données de pâte, un dispositif selon l'une quelconque des revendications précédentes, est disposé au début de la bande transporteuse (23) et pour continuer à s'étendre sous le support (20) de la réserve de pâte.

10. Procédé de fabrication de la pâte à biscuit ou feuilletée, selon la revendication 9, caractérisé en ce que la couche de beurre ou de margarine disposée sur la bande transporteuse (23) est plus étroite que la couche de pâte venant de support (34) de la réserve d'alimentation.

## Patentansprüche

1. Verfahren zur Bildung einer Schicht verlangter Dicke einer emulsionsartigen Substanz z.B Butter oder Margarine von einem beliebig geformten Vorrat (B) dieser Substanz durch wiederholtes Abschaben einer Menge von diesem Vorrat, gekennzeichnet durch nachheriges Abtrennen einer Portion der verlangten Dicke von dieser Menge, worauf die Portionen zur Bildung der verlangten Schicht in Reihenfolge zusammengefügt werden.

2. Vorrichtung zum Durchführen des Verfahrens nach Anspruch 1, welche Vorrichtung einen Vorratbehälter (34) mit einer Abfuhröffnung, ein Schabglied (33) mit midestens einem Randstreifen, der längs einer Bahn an der erwähnten Offnung vorbei bewegbar ist und ein Abstreifglied (35), das in einem Abstand von der Offnung in die Bahn des Randstreifens hineinragt, aufweist.

3. Vorrichtung nach Anspruch 2, dadurch gekennzeichnet dass das Schabglied in Form einer Anzahl um eine Welle (32) drehbarer Schaufeln (33) ausgebildet ist, wobei jede Schaufel einem sich nahezu parallel zur Welle erstreckenden Randstreifen aufweist.

4. Vorrichtung nach Ansprüchen 2 und 3, dadurch gekennzeichnet, dass in bezug auf die Drehrichtung der Randstreifen schleppend verläuft.

5. Vorrichtung nach Ansprüchen 2 bis 4, dadurch gekennzeichnet dass das Abstreifglied (35) und der Randstreifen des Abschafglieds (33) gegenseitig scherenartig angeordnet sind.

6. Vorrichtung nach Ansprüchen 2 bis 5, dadurch gekennzeichnet, dass eine Führungsplatte (37) in einem Abstand von der Tragfläche des Abstreifglieds (35) angeordnet ist.

7. Vorrichtung nach Ansprüchen 2 bis 6, dadurch gekennzeichnet dass das Abstreifglied (35) normal zur Bewegungsrichtung des Randstreifens einstellbar ist.

8. Vorrichtung nach einem der vorhergehenden Ansprüche dadurch gekennzeichnet, dass das oder jedes Abschabglied (33) aus biegsamem Material hergestellt ist.

9. Anlage zum Herstellen von Zwieback- oder Gebäckteig, die ein Teigvorratbehälter (20), ein Satz unter diesem Behälter angeordneter Förderbänder (23 bis 26), Schneidmittel (28) und Laminiermittel (27) zur wiederholten Aufstapelung, Laminierung und Schneidwirkung zum Erzielen Teigblätter bestimmter Länge aufweist, dadurch gekennzeichnet dass eine Vorrichtung nach einem der vorhergehenden Ansprüche an Anfang des sich unter dem Teigvorratbehälter (20) erstreckenden Förderbands (23) angeordnet ist.

10. Verfahren zur Herstellung von Zwieback- oder Gebächteig mittels der Anlage nach Anspruch 9, dadurch gekennzeichnet, dass die auf das Förderband (23) hingelegte Butter- der Margarineschicht schmäler als die darauf gelegte aus dem Vorratbehälter (34) fliessende Teigschicht, ist.

**0 005 570**

FIG. 3

FIG. 2

FIG. 1